(19) Europäisches Patentamt
European Patent Office
Office européen des brevets

(11) **EP 3 037 153 B1**

(12) **FASCICULE DE BREVET EUROPEEN**

(45) Date de publication et mention de la délivrance du brevet:
**16.08.2017 Bulletin 2017/33**

(51) Int Cl.:
***B01D 59/42*** *(2006.01)*     ***G01N 27/447*** *(2006.01)*
***G01N 27/62*** *(2006.01)*

(21) Numéro de dépôt: **15199766.5**

(22) Date de dépôt: **14.12.2015**

(54) **MESURE ISOTOPIQUE MULTIELEMENTAIRE PAR COUPLAGE DIRECT D'UNE TECHNIQUE D'ISOTACHOPHORESE MULTI-CYCLES ET D'UNE TECHNIQUE DE SPECTROMETRIE DE MASSE**

MULTIELEMENT-ISOTOPENMESSUNG DURCH DIREKTE KOPPLUNG EINER MULTIZYKLISCHEN ISOTACHOPHORESE-TECHNIK UND EINER MASSENSPEKTRONOMIE-TECHNIK

MULTI-ELEMENT ISOTOPIC MEASUREMENT BY DIRECT COUPLING OF A MULTI-CYCLE ISOTACHOPHORESIS TECHNIQUE AND A MASS SPECTROMETRY TECHNIQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2014 FR 1463134**

(43) Date de publication de la demande:
**29.06.2016 Bulletin 2016/26**

(73) Titulaire: **COMMISSARIAT À L'ÉNERGIE ATOMIQUE ET AUX ÉNERGIES ALTERNATIVES**
**75015 Paris (FR)**

(72) Inventeurs:
- **CHARTIER, Frédéric**
  **92260 FONTENAY AUX ROSES (FR)**
- **VIO, Laurent**
  **01120 DAGNEUX (FR)**
- **NONELL, Anthony**
  **91160 LONGJUMEAU (FR)**
- **ISNARD, Hélène**
  **92169 ANTONY (FR)**

(74) Mandataire: **Joubert, Cécile et al**
**Marks & Clerk France**
**Counseils en Propriete Industrielle**
**Immeuble "Visium"**
**22, avenue Aristide Briand**
**94117 Arcueil Cedex (FR)**

(56) Documents cités:
**WO-A1-2012/072963     US-A- 3 705 845**

**Description**

La présente invention appartient au domaine des procédés d'analyse qualitative ou quantitative des constituants d'un échantillon à l'aide d'un spectromètre de masse équipé d'une source plasma à couplage inductif, plus connu sous le nom d'ICP-MS, acronyme de « Inductively Coupled Plasma Mass Spectrometry», en langue anglaise.

L'invention concerne plus particulièrement un procédé de mesure isotopique multiélémentaire, à l'aide d'un spectromètre de type ICP-MS, d'espèces électriquement chargées, et en particulier, d'espèces minérales ou organométalliques, contenues dans une solution.

La mesure isotopique est notamment réalisée dans le domaine nucléaire, celui de l'environnement, des géosciences et des sciences du vivant.

La mesure isotopique consiste à déterminer la présence et/ou la concentration dans un échantillon d'un ou plusieurs isotopes d'un élément chimique.

Chaque élément du tableau périodique présente un ou plusieurs isotopes à savoir des atomes différents d'un même élément. Deux isotopes d'un même élément présentent le même nombre de protons et d'électrons mais un nombre de neutrons différent.

Typiquement, le fer noté Fe présente des isotopes stables de masses 54, 56, 57 ou 58 Unités de Masse Atomique (u.m.a) notés $^{54}$Fe, $^{56}$Fe, $^{57}$Fe et $^{58}$Fe. La détermination des rapports isotopiques consiste à mesurer l'abondance de chacun de ces isotopes et de calculer leurs proportions respectives.

Dans le cas du fer, le rapport isotopique $^{56}$Fe/$^{57}$Fe revient à exprimer l'abondance du $^{56}$Fe par rapport à celle du $^{57}$Fe.

Les mesures isotopiques permettent notamment de déterminer :

- les abondances isotopiques des différents isotopes d'un même élément,
- la concentration précise d'un élément particulier en solution par l'ajout d'une proportion connue de traceur, ce dernier étant parfaitement caractérisé en terme de composition isotopique et de concentration. Cette méthode est connue sous le nom de dilution isotopique simple,
- le rapport d'abondance entre deux isotopes d'éléments distincts (ex : $^{145}$Nd/$^{238}$U) par l'ajout d'un traceur isotopique double (ex : $^{148}$Nd/$^{233}$U) selon la méthode dite de dilution isotopique double.

La méthode de dilution isotopique simple consiste à ajouter à l'échantillon un traceur qui est le même élément mais de composition isotopique différente, par exemple, enrichi en un des isotopes de l'élément à doser. Cette méthode permet d'effectuer des mesures élémentaires de grande précision, sans droite d'étalonnage en connaissant parfaitement la composition isotopique et la concentration du traceur et en se basant sur la mesure des rapports isotopiques.

Les mesures isotopiques nécessitent d'utiliser des appareillages, comme les spectromètres de masse, capables de fournir une réponse sélective sur une ou plusieurs masses atomiques données, l'intensité de la réponse devant être proportionnelle à l'abondance des isotopes.

La technique la plus couramment utilisée est l'ICP-MS. Les spectromètres de type ICP-MS se composent d'une torche à plasma et d'un spectromètre de masse. La torche à plasma contient généralement un gaz rare (l'argon dans la majorité des cas) qui, sous l'action d'une décharge électrique et d'un champ radiofréquence, génère un plasma qui ionise avec un rendement proche de 1 la plupart des éléments introduits dans la torche sous forme élémentaire ou de composés. La spectrométrie de type ICP-MS est devenue une technique analytique incontournable depuis de nombreuses années. Elle permet d'analyser rapidement la majorité des éléments de la classification périodique de manière qualitative et quantitative, tout en présentant une bonne reproductibilité, sensibilité, résolution, et une relation linéaire entre la quantité de l'espèce à analyser et le signal détecté.

Pour obtenir les meilleures précisions possibles sur la mesure des rapports isotopiques, il est nécessaire d'utiliser un ICP-MS multi-collecteur (MC-ICPMS) qui permet de mesurer simultanément l'abondance de plusieurs isotopes. Ce type d'appareillage permet, notamment, de s'affranchir de l'instabilité du faisceau d'ions au niveau de la source du spectromètre de masse.

Toutefois, lorsque la solution à analyser comprend plusieurs espèces chargées de masse atomique très proches (isobares), il est nécessaire préalablement à la mesure de séparer individuellement les espèces avec une technique chimique séparative telle que la chromatographie en phase liquide ou l'électrophorèse capillaire.

En effet, en dépit du pouvoir de résolution élevée des spectromètres de type ICP-MS, ils ne sont pas capables de résoudre ou de différencier toutes les interférences isobariques.

On parle d'interférence isobarique lorsque deux isotopes d'éléments différents présentent des masses atomiques dont la différence est comprise entre 0,001 et 0,9 unité de masse atomique.

Par exemple, la séparation de deux isotopes de deux éléments différents tels que le néodyme de masse exacte 149,9209 ($^{150}$Nd) unités de masse atomique (u.m.a) et le samarium ($^{150}$Sm) de masse exacte 149,9173 u.m.a nécessite un pouvoir de résolution supérieur à 40000, bien supérieur aux capacités des spectromètres de type ICP-MS.

On entend par pouvoir de résolution l'aptitude d'un spectromètre de masse à séparer un ion de masse M d'un ion de masse M+∆M, avec R= M / (M+∆M).

En pratique, l'association entre une technique chimique séparative et un spectromètre de type ICP-MS peut être effectuée selon un mode de couplage indirect ou « off-line », en langue anglaise, ou selon un mode de couplage direct ou « on-line », en langue anglaise.

Selon le mode de couplage indirect, la mesure isotopique est réalisée en deux temps.

Dans un premier temps, les espèces contenues dans la solution sont séparées puis collectées individuellement en sortie de technique séparative. Dans un deuxième temps, chaque fraction collectée est portée à sec par chauffage, remise en solution avec de l'acide nitrique dilué puis analysée par le spectromètre de type ICP-MS. Chaque fraction contient alors une seule espèce (un seul élément) et il n'y a plus d'interférences isobariques. Le signal mesuré par le spectromètre de type ICP-MS est stationnaire ou constant car la solution contenant l'élément préalablement séparé est introduite de façon continue, ce qui a pour avantage d'assurer la stabilité lors des mesures de rapports isotopiques, et, par voie de conséquence, d'améliorer la précision de la mesure.

Le couplage indirect présente toutefois l'inconvénient de nécessiter des étapes de collecte et de traitement de fractions préalablement séparées. Ces étapes sont difficilement automatisables et allongent significativement la durée de l'ensemble du processus d'analyse.

Selon le mode de couplage direct, la mesure isotopique est réalisée en une seule séquence. Une fois séparées, les espèces sont directement introduites, ou en d'autres termes, introduites sans décalage temporel entre chaque espèce dans le spectromètre de type ICP-MS. Le couplage de la technique chimique séparative au spectromètre est réalisé via une interface appropriée. Le couplage direct s'affranchit donc du traitement des fractions collectées inhérent au couplage indirect ce qui permet de réduire notablement le temps d'analyse.

Le document US3 705 845 décrit un procédé de séparation par isotachophérèse à contre courant. La séparation est faite dans une colonne ou des électrodes créent un champs électrique qui imposent un mouvement des ions à séparer dans le sens contraire au sens du flux du liquide porteur. Les deux mouvements peuvent s'annuler de sorte que l'espèce à séparer ne bouge pas dans la colonne. Le document « Pitois A. et al., International Journal Of Mass Spectrometry, 2008, 270, pages 118-126 » propose ainsi une mesure isotopique dans laquelle des produits de fission d'une solution de combustible nucléaire sont séparés par électrophorèse à l'aide d'un dispositif d'électrophorèse capillaire relié par couplage direct à un spectromètre de type ICP-MS.

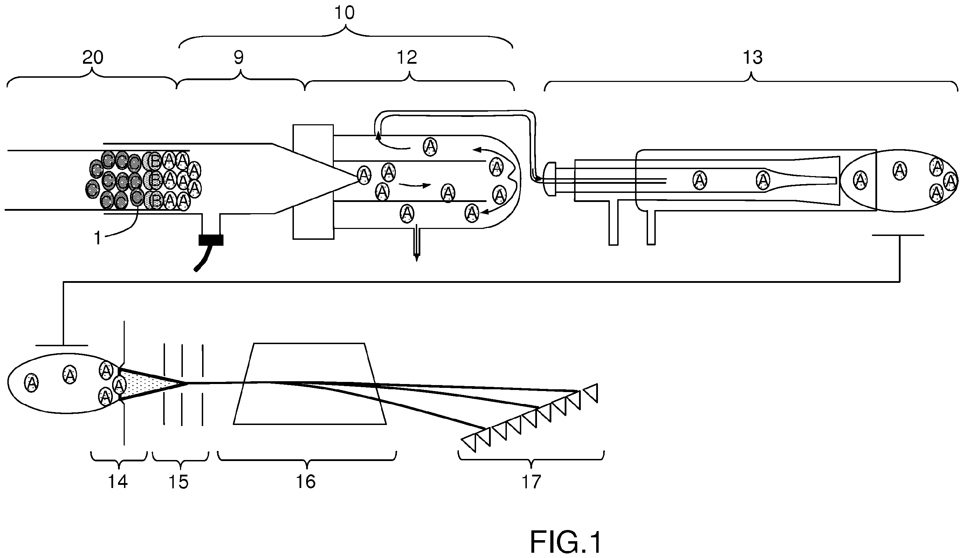

La figure 1 représente un schéma de principe d'une mesure isotopique par couplage direct via une interface de couplage 10 entre un dispositif de séparation des espèces et un spectromètre de masse de type ICP-MS, l'interface de couplage 10 comprenant un nébuliseur 9 sur la figure et une chambre de tri 12. En sortie du dispositif de séparation 20, les espèces à analyser A, B, C sont introduites dans le nébuliseur 9 dans lequel les espèces A, B, C sont transformées en aérosol comprenant de fines gouttelettes et un gaz vecteur (généralement de l'argon). Bien évidemment, le nombre d'espèces à analyser peut être supérieur à trois.

Les gouttelettes les plus fines comprenant les espèces A, B, C sont ensuite sélectionnées dans une chambre de tri 12 de sorte à transmettre à la torche à plasma 13 du spectromètre ICP-MS un aérosol homogène et stable. En sortie de la torche à plasma 13, les espèces A, B, C sont désolvatées, atomisées et ionisées. Les ions sont alors extraits du plasma à l'aide de cônes d'extraction 14 puis focalisés à l'aide de lentilles de focalisation 15, avant d'entrer dans le spectromètre ICP-MS. Sous l'action d'un champ magnétique généré par un aimant 16, les faisceaux d'ions correspondants aux différents isotopes sont séparés suivant des trajectoires circulaires individuelles qui dépendent du rapport masse/charge des isotopes à analyser. L'information sur l'abondance des isotopes est obtenue en plaçant sur leur trajectoire des détecteurs 17 qui enregistrent simultanément et en continu l'intensité de chacun des faisceaux d'ions mono-isotopiques. Généralement, les spectromètres MC-ICPMS disposent de 9 à 16 détecteurs 17.

Un autre document de l'art antérieur EP 2646813 divulgue un procédé de mesure isotopique dans lequel le couplage entre la technique séparative et le spectromètre ICPMS permet notamment une mesure automatisable et de durée réduite, présentant une reproductibilité et une résolution améliorée, en particulier, lorsque la solution comprend plusieurs éléments présentant une ou plusieurs interférences isobariques.

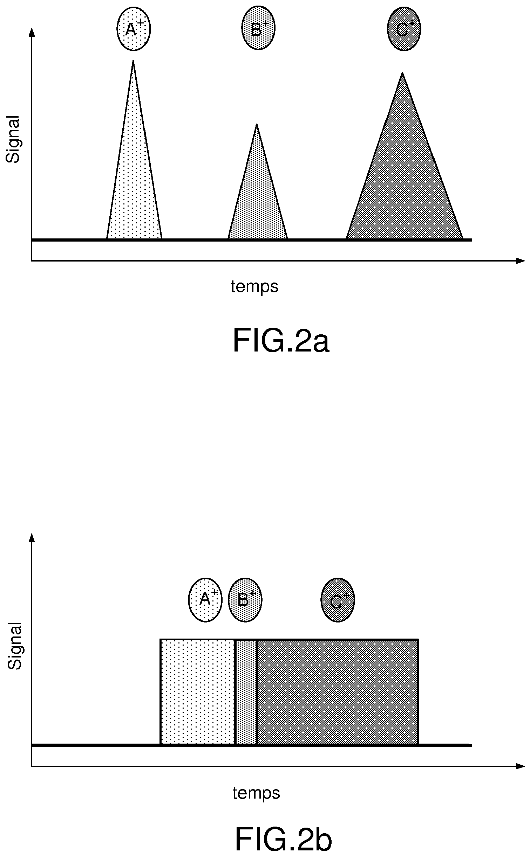

Les méthodes séparatives classiquement utilisées telles que la chromatographie ou l'électrophorèse permettent une séparation individuelle des espèces A, B, C qui sont éluées sous forme de pics mono-élémentaires de forme triangulaire, tels que représentés schématiquement sur la figure 2a.

Ce type de pic ne permet qu'un faible nombre de points de mesure par unité de temps.

De plus, il existe de fortes variations d'amplitude du signal entre deux points consécutifs qui provoquent une instabilité et surtout une imprécision de la mesure par le spectromètre de type ICP-MS.

Dans la configuration isotachophorèse d'un dispositif d'électrophorèse, une fois la séparation réalisée, l'élution se fait sous la forme de bandes, comme représenté sur la figure 2b, permettant ainsi d'obtenir des mesures plus précises.

L'isotachophorèse (ITP) est une méthode de séparation des espèces en fonction de leur rapport charge électrique/ taille. Le dispositif utilisé pour la mise en oeuvre de cette méthode est un dispositif d'électrophorèse capillaire classique.

Le dispositif d'électrophorèse capillaire se compose essentiellement de deux réservoirs reliés par une colonne capillaire, chaque réservoir contenant un électrolyte et une électrode. Après application d'une tension entre les deux électrodes, les espèces introduites dans le capillaire rempli d'électrolyte se séparent suivant leur vitesse de migration électrophorétique qui est fonction de leur rapport charge électrique/taille. Les espèces séparées sont ensuite détectées à l'aide d'une technique analytique appropriée.

Le mode isotachophorèse de l'électrophorèse capillaire se caractérise par l'utilisation d'un milieu de séparation discontinu composé d'un électrolyte meneur M et d'un électrolyte terminal T de composition distincte entre lesquels on intercale de façon contiguë la solution S à analyser. L'électrolyte meneur M présente une vitesse de migration électrophorétique la plus grande du dispositif, et l'électrolyte terminal T présente la vitesse de migration électrophorétique la plus petite du dispositif. Les électrolytes meneur M et terminal T sont respectivement placés après l'entrée et avant la sortie du capillaire.

La composition des électrolytes doit donc tenir compte de la valeur des vitesses de migration électrophorétique des espèces, sous peine que ces espèces ne soient pas séparées.

Après application d'une tension entre les extrémités du capillaire (entrée et sortie du capillaire), les espèces, sous l'effet d'un courant d'intensité constante ou d'un champ électrique constant, vont s'ordonner progressivement selon leur vitesse de migration électrophorétique jusqu'à atteindre un état d'équilibre appelé quasi-stationnaire. Les espèces se répartissent alors dans des bandes d'élution contigües nettement délimitées et qui leur sont propres. Les espèces sont donc concentrées ou diluées en fonction de leur concentration initiale dans la solution.

L'isotachophorèse se distingue donc de la mise en oeuvre classique de l'électrophorèse capillaire par l'utilisation d'un milieu de séparation discontinu, comprenant au moins deux électrolytes au lieu d'un seul, mais également par le fait que, puisque la concentration d'une espèce est homogène en tous points de la zone d'élution obtenue en isotachophorèse, sa détection se traduit par un signal d'amplitude constante ou sensiblement constante au sein de cette zone, plutôt que par un pic reflétant une variation de concentration dans le temps. Le nombre de points de mesure que peut enregistrer le spectromètre ICP-MS dépend de la largeur de la zone d'élution.

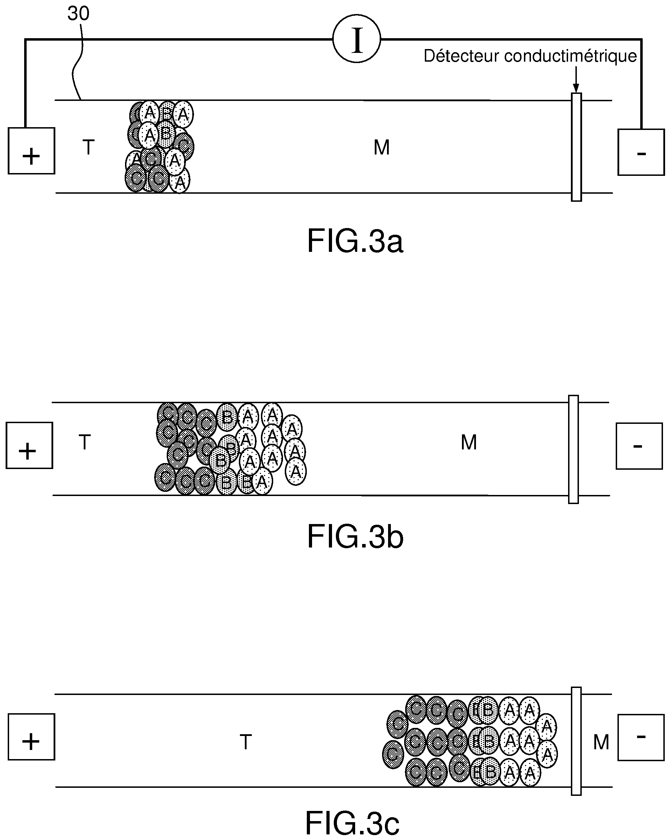

Le principe de séparation par isotachophorèse peut se résumer comme représenté sur la figure 3.

Dans un capillaire 30, on injecte dans l'ordre, un électrolyte meneur M, une solution S comprenant les espèces A, B et C et un électrolyte terminal T, les bornes du capillaire 30 étant reliées à un générateur de tension électrique noté I (figure 3a).

L'électrolyte meneur M détermine la vitesse de migration électrophorétique, il est choisi de façon à disposer de la vitesse de migration électrophorétique la plus grande du système.

À l'inverse, l'électrolyte terminal T présente la vitesse de migration électrophorétique la plus faible du système.

La composition des électrolytes doit donc tenir compte des espèces d'intérêt sous peine que ces espèces ne soient pas séparées. Les électrolytes meneur M et/ou terminal T présentent généralement une concentration comprise entre 1 mM et 100 mM, de préférence entre 10 mM et 20 mM. Ils possèdent généralement un pouvoir tampon.

L'électrolyte terminal T peut être un composé zwitterionique tel que le chlorure de carnitine ou un acide carboxylique comme l'acide acétique. Préférentiellement, les électrolytes meneur M et terminal T sont des solutions aqueuses comprenant des éléments tels que l'oxygène, l'hydrogène, l'azote et le carbone de manière à permettre une destruction aisée en fin d'analyse.

Sous l'effet du courant d'intensité constante (ou de champ électrique constant) de quelques dizaines de nanoampères à quelques dizaines de microampères (ou de quelques volts à kilovolts respectivement), les espèces A, B et C se réorganisent en fonction de leur vitesse de migration électrophorétique créant un gradient de vitesse entre l'électrolyte terminal T et l'électrolyte meneur M (Figure 3b).

À l'issue de cette réorganisation (figure 3c), les espèces A, B et C sont séparées et concentrées en bandes mono-élémentaires contiguës entre l'électrolyte meneur M et l'électrolyte terminal T. Les espèces A, B et C ainsi que les électrolytes meneur M et terminal T migrent alors à une vitesse identique imposée par l'électrolyte meneur M.

La performance d'un système de séparation d'isotachophorèse est définie par la notion de résolution ou de taux de purification des espèces.

La loi d'Ohm (Equation 1) qui s'applique durant la séparation relie la conductivité $\sigma$ d'un échantillon à la longueur L et au diamètre interne d du capillaire 30 ainsi qu'à la valeur de tension électrique U du générateur de tension électrique.

$$U = \frac{4I}{\pi\sigma} \cdot \frac{L}{d^2} \qquad \text{(Equation 1)}$$

Lorsqu'on injecte une solution S comprenant une forte concentration de l'un des éléments par rapport aux éléments traces, il est nécessaire d'augmenter la quantité de solution S à injecter dans le capillaire 30 de manière à obtenir des bandes comprenant les éléments traces de longueur significative ce qui améliore la capacité de séparation.

Cette optimisation de la capacité de séparation revient à diminuer le diamètre interne d du capillaire 30 ou à augmenter la longueur du capillaire L.

Par exemple, si le capillaire mesure 3 m et la tension 30 kV, on obtient une tension de 1 kV pour chaque fraction de 10 cm. Si l'on augmente la longueur du capillaire à 30 m, la tension aux bornes d'une fraction de longueur de 10 cm chute à 0,1 KV.

Pour maintenir une tension de 30 kV aux bornes du capillaire 30, il faudrait conserver la longueur L du capillaire 30 et augmenter le diamètre interne d ce qui dégraderait la capacité de séparation du système.

Une publication de F.M. Everaert et al. "Isotachophoresis, experiments with electrolyte counterflow", J. Chromatogr. 60(1971) 397- 405 propose d'appliquer une contre-pression continue dans le sens opposé à la direction de migration électrophorétique des espèces A, B et C de manière à ralentir la vitesse de migration des espèces.

Une autre publication de S. Bhattacharyya et al. "Sample dispersion in isotachophoresis with Poiseuille counterflow", Phys. Fluids 25 (2013) étudie aussi cette possibilité. Cette étude conclue que l'application d'une contre-pression continue lors de la séparation des espèces par isotachophorèse s'accompagne d'une augmentation de la dispersion ce qui réduit le rendement de purification des espèces, et particulièrement des éléments traces.

Aussi, un but de l'invention est de proposer un procédé de séparation permettant de séparer les éléments ayant des interférences isobariques notamment sans diminuer le rendement de purification.

Il est proposé un procédé de séparation d'espèces électriquement chargées dans une solution par une méthode d'isotachophorèse comprenant :

- une première étape dans laquelle on introduit en entrée d'un capillaire d'électrophorèse, dans l'ordre suivant, un électrolyte meneur présentant la vitesse de migration électrophorétique la plus élevée, une solution comprenant des espèces chargées présentant des vitesses de migration intermédiaires propres et un électrolyte terminal présentant la vitesse de migration la plus faible.

Les étapes suivantes sont réalisées de manière itérative jusqu'à obtenir la séparation d'au moins une espèce chargée contenue dans la solution :

- une deuxième étape dans laquelle on applique une tension électrique entre les deux extrémités du capillaire de manière à débuter la séparation des espèces,

- une troisième étape dans laquelle on arrête la tension électrique,

- une quatrième étape dans laquelle on applique une contre-pression de sorte à déplacer les espèces vers l'entrée du capillaire, la vitesse de déplacement des espèces lors de l'application de la contre-pression étant inférieure à la vitesse de migration électrophorétique des espèces sous l'effet du courant électrique.

Avantageusement, on déplace les espèces jusqu'au niveau de l'entrée du capillaire.

L'arrêt de la tension électrique et l'application transitoire d'une contre-pression permet d'utiliser plusieurs fois la longueur du capillaire et d'allonger artificiellement la distance de séparation.

Selon un mode de réalisation, le procédé comprend en outre une cinquième étape dans laquelle on effectue une mesure de rapport isotopique par spectrométrie de masse couplée à une source à plasma inductif (ICP-MS) de toutes les espèces électriquement chargées contenues dans la solution et séparées par isotachophorèse, le spectromètre de masse étant directement couplé avec le dispositif d'électrophorèse.

Selon un autre mode de réalisation, dans une cinquième étape, on récupère après la deuxième étape d'application de la tension une première espèce séparée préalablement à la troisième étape d'arrêt du champ électrique permettant de ne conserver que les espèces présentes à l'état de trace, notamment. Ce mode de réalisation permet d'extraire une espèce de plus grande vitesse de migration que les autres espèces du système et ainsi d'améliorer les performances de la séparation des espèces restantes lors de la poursuite de la séparation.

Avantageusement, le procédé comprend en outre une sixième étape dans laquelle on effectue une mesure de rapport isotopique par spectrométrie de masse couplée à un plasma inductif de la première espèce séparée par isotachophorèse avant de poursuivre la séparation par isotachophorèse des autres espèces électriquement chargées de la solution, le spectromètre de masse étant directement couplé avec le dispositif d'électrophorèse.

Le couplage direct évite les étapes de collecte ce qui diminue les quantités de solvant à retraiter en fin d'analyse.

Avantageusement, le dispositif d'électrophorèse capillaire est au moins en partie un microsystème fluidique.

Avantageusement, le spectromètre de masse couplé à un plasma induit (ICP-MS) est de type multi-collection (MC-ICPMS) permettant la détection de plusieurs isotopes de façon simultanée.

Avantageusement, le procédé comprend en outre une septième étape permettant le repositionnement ad hoc des détecteurs du spectromètre de masse lors d'un arrêt de la tension électrique ce qui permet la réalisation d'anlyses isotopiques multiélémentaires d'une solution comprenant un nombre d'isotopes plus important que de détecteurs présents sur le MC-ICPMS.

Le procédé proposé est particulièrement avantageux pour la séparation des espèces électriquement chargées comprenant des anions minéraux, des cations minéraux, des composés organométalliques, des métaux de transition, des alcalins, des alcalino-terreux, des lanthanides et/ou des actinides ou leurs mélanges et où au moins deux espèces électriquement chargées présentent une interférence isobarique telle que la différence de masse atomique entre les espèces chargées est comprises entre 0,001 et 0,9 unité de masse atomique (u.m.a).

Avantageusement, l'électrolyte meneur et/ou terminal est une solution aqueuse d'un composé comprenant les éléments carbone et oxygène.

L'invention sera mieux comprise et d'autres avantages apparaîtront à la lecture de la description qui va suivre, donnée à titre d'exemple non limitatif, et grâce aux figures annexées parmi lesquelles :

- la figure 1, déjà décrite, représente un schéma d'un dispositif pour la réalisation de mesures isotopiques par couplage « on-line » d'une technique chimique de séparation avec un spectromètre de masse couplé à un plasma inductif multi-collecteur (MC-ICPMS),

- les figures 2a et 2b, déjà décrites, représentent les profils d'élution obtenus respectivement, par une méthode chimique de séparation classique et par isotachophorèse,

- la figure 3, déjà décrite, représente un schéma de principe du processus de séparation de trois espèces par isotachophorèse, selon l'art connu,

- les figures 4a, 4b, et 4c représentent le déroulement d'une analyse d'isotachophorèse, selon l'art connu,

- les figures 5a, 5b, 5c, 5d et 5e représentent le déroulement d'une analyse d'isotachophorèse présentant un arrêt de la séparation, selon un aspect de l'invention

- Les figures 6a, 6b, 6c et 6d représentent le déroulement d'une analyse d'isotachophorèse à utilisation multiple de la longueur de séparation, selon un autre aspect de l'invention,

- Les figures 7a, 7b, 7c, 7d, 7e, 7f présentent des graphiques d'intensité des signaux conductimétriques en fonction du temps, les graphiques sont obtenus après chacun des cinq cycles de mesure à l'aide d'un détecteur conductimétrique.

- les figures 8a, 8b, 8c, 8d représentent le déroulement d'une mesure de rapports isotopiques multiélémentaire par couplage direct d'une méthode d'isotachophorèse multi-cycle séquentielle et d'une méthode de spectrométrie à l'aide d'un spectromètre de masse multi-collecteur couplé à une source plasma inductif.

- La figure 9 est une représentation graphique des signaux obtenus par couplage avec un ICPMS suite à l'analyse selon l'invention d'un mélange de quatre lanthanides présentant 29 isotopes.

La fonction de régulation de Kohlrausch (KRF) est une loi de conservation qui décrit le mécanisme de migration électrophorétique des ions lorsqu'ils sont soumis à un courant d'intensité constante, cette loi s'exprime selon la relation (2) :

$$\sum_{i=1}^{n} \frac{|z_i| c_i}{\mu_i} = Wx \qquad \text{Equation 2}$$

$z_i$ étant la valence des ions
$c_i$ étant la concentration
$\mu_i$ la mobilité et
$Wx$ une constante définie pour chaque point du système électrophorétique.

Cette loi définit une constante $Wx$ pour chaque zone d'électrolyte. En d'autres termes, l'électrolyte meneur M présente une constante $Wx(M)$, la solution S présente une constante $Wx(S)$ et l'électrolyte terminal T présente une constante $Wx(T)$. Ces valeurs de constante sont maintenues inchangées au cours de la migration des espèces. En d'autres termes, lorsqu'une espèce migre depuis un point x1 ayant une constante KRF1 vers un point x2 ayant une constant KRF2, la concentration de l'espèce considérée évolue de manière à respecter la nouvelle constante KRF2.

Aussi, si KRF1 est supérieure à KRF2, alors l'espèce considérée se dilue en étendant la distance sur laquelle elle peut être détectée.

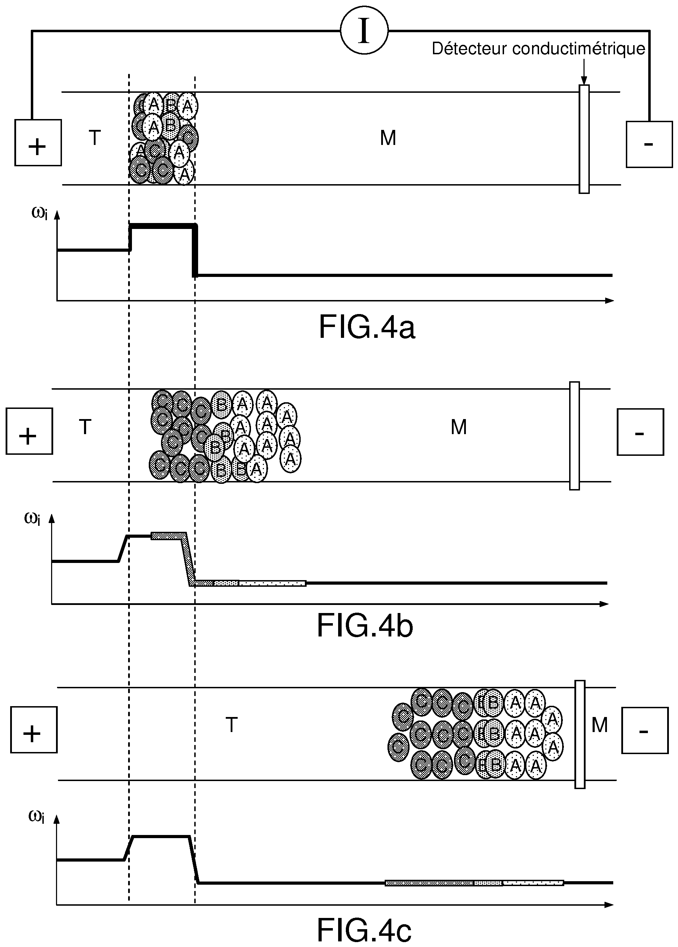

Les figures 4 représentent le déroulement d'une analyse d'isotachophorèse classique. Ces figures permettent notamment de mettre en évidence l'effet de la fonction de Kohlrausch décrit précédemment sur la migration électrophorétique des espèces.

La figure 4a représente un capillaire à l'état initial tel que décrit sur la figure 3a. En l'espèce, l'électrolyte meneur M présente une constante W$x$(M), la solution S présente une constante W$x$(S) et l'électrolyte terminal T présente une constante W$x$(T).

Les valeurs des constantes KRF sont représentées sur un diagramme en fonction de la coordonnée x où l'on se situe dans le capillaire 30.

La figure 4b représente le capillaire 30 dans lequel les espèces A, B, et C sont en cours de migration.

Par exemple, lorsque l'espèce C migre vers l'électrolyte meneur M et que la valeur de la constante KRF de la solution W$x$(S) est supérieure à la valeur de la constante KRF W$x$(M) de l'électrolyte meneur M, il se produit une dilution de l'espèce C de sorte que la valeur de la concentration respecte la valeur de la constante KRF W$x$(M) de l'électrolyte meneur M. En d'autres termes, la concentration de l'espèce C diminue par allongement de la distance sur laquelle on détecte l'espèce C.

En figure 4c, la séparation des espèces A, B et C est achevée. Les espèces A, B, C sont réparties sous la forme de bandes mono-élémentaires contigües.

En outre sur la figure 4c, l'électrolyte terminal T illustre la loi de conservation de Kohlrausch. L'électrolyte terminal T est concentré à l'entrée de la zone correspondant initialement à la zone de la solution S par contre l'électrolyte terminal T est ensuite dilué à l'entrée de la zone correspondant initialement à la zone de l'électrolyte meneur M. Aussi, la concentration de l'électrolyte terminal n'est pas constante le long du capillaire 30 ce qui se reflète sur le graphique représentant les valeurs de constante KRF en fonction de x.

L'isotachophorèse est une technique qui se différencie des autres techniques de séparation chimique par sa capacité d'auto-focalisation des espèces dans des bandes distinctes dont la longueur varie au cours de la séparation puis demeure constante une fois l'état quasi-stationnaire atteint. C'est cette caractéristique particulière à la technique d'isotachophorèse qu'exploite l'invention.

On entend par état quasi-stationnaire, l'état dans lequel se trouve le système une fois la séparation effectuée.

Cette propriété particulière permet d'arrêter et de reprendre la séparation avec une dégradation limitée des performances de la technique. Ainsi, un principe d'un aspect de l'invention repose sur une étape d'arrêt transitoire du générateur de tension aux bornes du capillaire 30 ce qui a pour conséquence de stopper la migration des espèces à séparer.

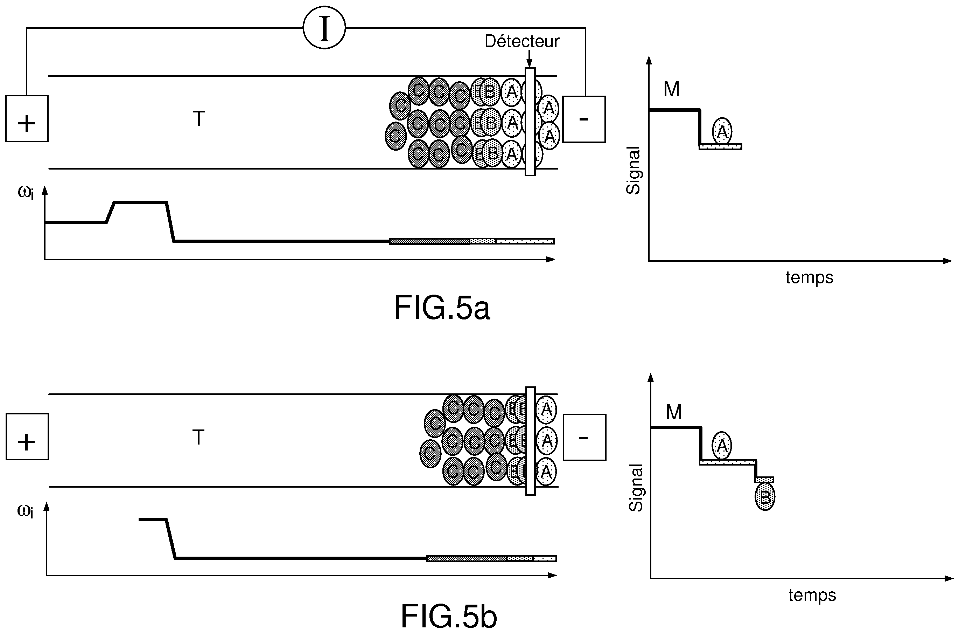

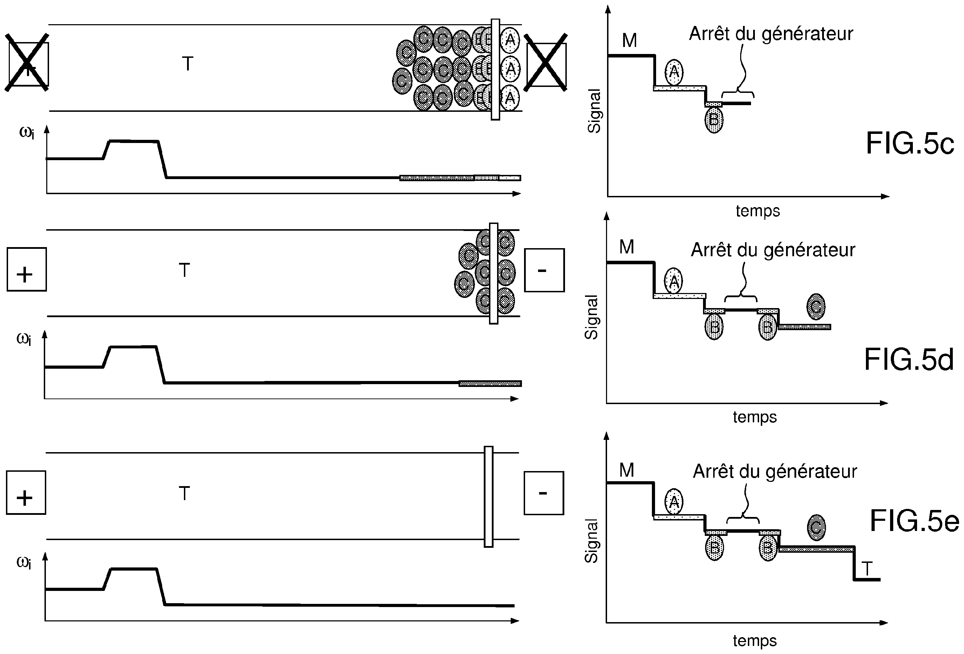

Les figures 5 représentent le déroulement d'une analyse d'isotachophorèse au cours de laquelle le générateur de tension est arrêté de manière temporaire.

La figure 5a représente un capillaire 30 dans lequel les espèces A, B, C ont été séparées par isotachophorèse, comme représenté sur la figure 4c. La représentation du signal conductimétrique, obtenu par un détecteur situé au niveau de l'extrémité de sortie du capillaire en fonction du temps présente un premier plateau correspondant à l'électrolyte meneur M et un deuxième plateau correspondant à l'espèce A.

La figure 5b représente le capillaire 30 alors que débute la détection de l'espèce B. Un deuxième plateau correspondant à l'espèce B apparaît sur le graphique du signal conductimétrique en fonction du temps.

La figure 5c représente le capillaire lorsqu'on arrête le générateur de tension électrique. La migration des espèces est stoppée, l'espèce B reste en vis-à-vis du détecteur ce qui se traduit par une augmentation de la longueur du plateau correspondant à l'espèce B.

La figure 5d représente le capillaire 30 à la reprise de la migration, l'espèce B termine sa migration, l'espèce C est ensuite détectée. Sur le graphique associé du signal conductimétrique en fonction du temps, il apparaît alors un nouveau plateau correspondant à l'espèce C.

Enfin, la figure 5e représente le capillaire 30 lors du passage de l'électrolyte terminal T au niveau du détecteur. Le signal en fonction du temps présente un quatrième plateau correspondant à l'électrolyte terminal T.

Les différentes étapes de séparation peuvent être réitérées si la séparation des epèces B et C n'est pas obtenue.

Ces figures mettent bien en évidence que l'arrêt transitoire du générateur de tension électrique entraînant l'arrêt de la migration des espèces ne fait pas évoluer le système. En d'autres termes, l'arrêt temporaire de la migration n'a pas d'influence sur la séparation par isotachophorèse.

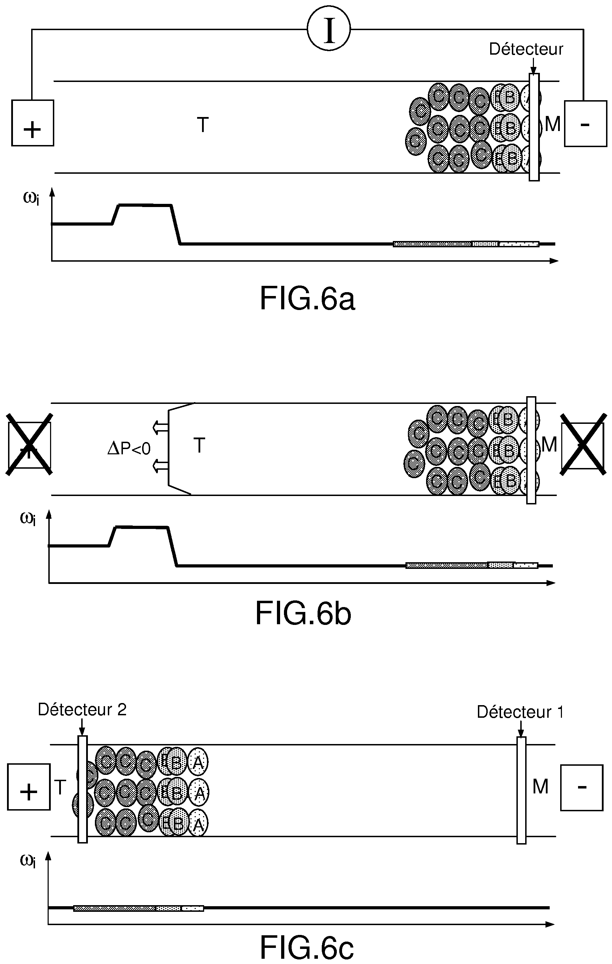

Les figures 6a à 6d représentent le déroulement d'une analyse par isotachophorèse au cours de laquelle le générateur de tension électrique est arrêté après un cycle de migration et une contre-pression appliquée de manière transitoire.

La figure 6a représente le capillaire dans lequel les espèces A, B, et C ont migré jusqu'au niveau du détecteur près de la sortie du capillaire 30, après un premier cycle de séparation. La séparation des espèces A, B et C a débuté, selon le principe décrit en figure 3, mais n'est pas encore achevée. En effet, une partie de l'espèce A est isolée mais l'autre partie de l'espèce A et les espèces B et C sont encore mélangées.

La figure 6b correspond à une étape d'arrêt du champ électrique et d'application d'une contre-pression ΔP dans le sens opposée au sens de migration des espèces de sorte à renvoyer toutes les espèces A, B, C au niveau de l'entrée du capillaire 30.

L'application de la contre-pression ΔP mélange à nouveau les espèces A, B et C. Aussi, il est nécessaire de configurer la contre-pression ΔP de sorte que l'agglomération ou le mélange des espèces n'annule pas complètement le début de séparation obtenu par le premier cycle de séparation. Plus précisément, la vitesse de retour vers l'entrée du capillaire des espèces A, B, C doit être inférieure à la vitesse de migration des espèces A, B, C lors du premier cycle de séparation.

Avantageusement, on place un deuxième détecteur au niveau de l'entrée du capillaire de manière à stopper l'application de la contre-pression lorsque les espèces A, B et C arrivent au niveau de l'entrée du capillaire 30

La figure 6c représente le deuxième cycle de migration des espèces lors de la reprise de la migration. Les espèces A, B, et C reprennent leur migration avec une vitesse dépendante de leur rapport charge/taille en formant des bandes.

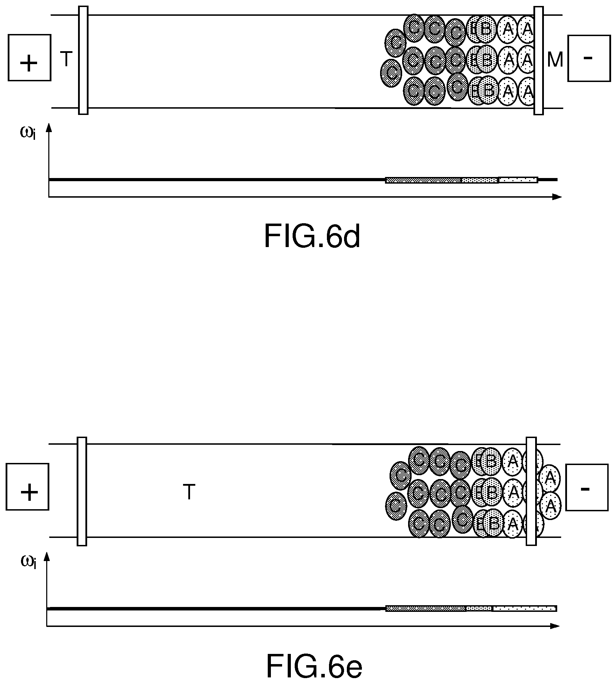

La figure 6d correspond à un stade de séparation des espèces plus avancés, les bandes mono-élémentaires commencent à apparaître.

Sur la figure 6e, la séparation est achevée, les espèces A, B et C sont réparties sous la forme de bandes mono-élémentaires. Le détecteur situé près de la sortie du capillaire 30 détecte alors les différentes espèces comme pour la figure 5e.

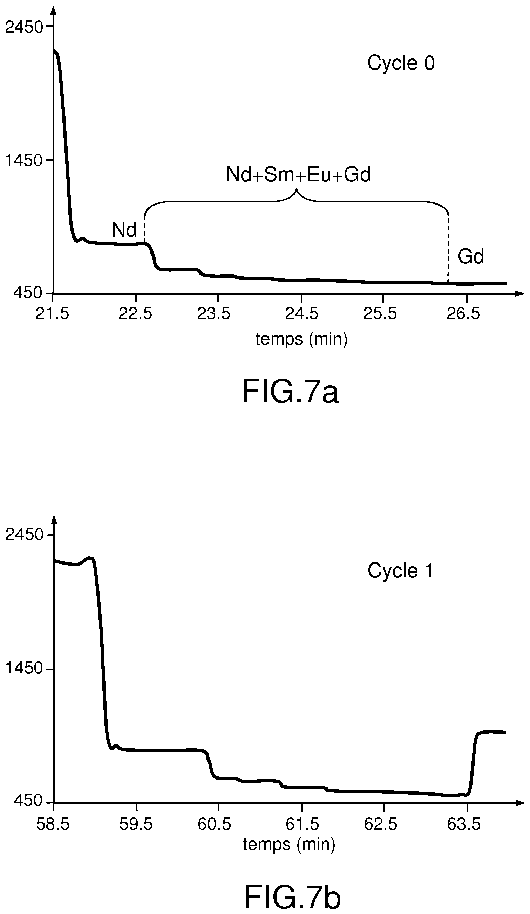

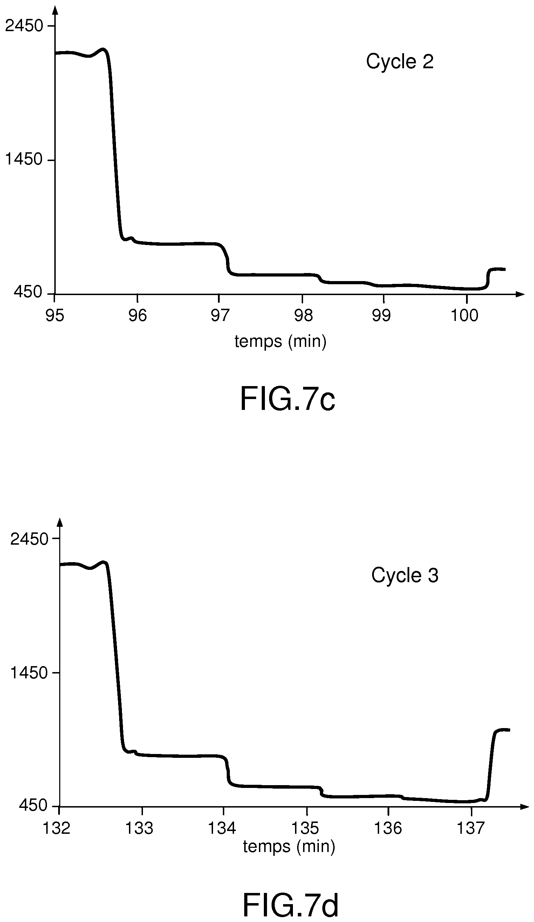

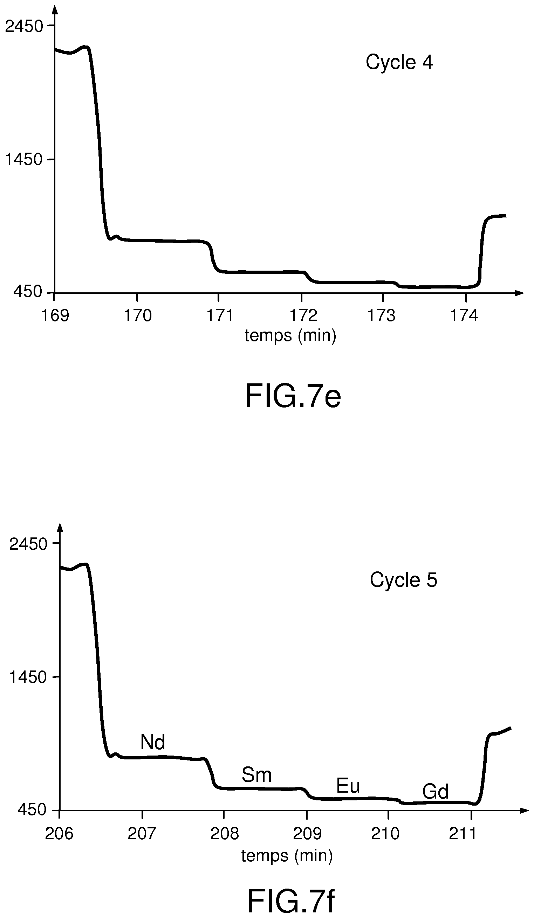

Les figures 7a à 7f représentent l'évolution de la séparation d'un mélange de quatre lanthanides Nd, Sm, Eu et Gd introduits en quantité identique, en l'espèce 177 ng, dans un capillaire de 1 m de long et de 75 microns de diamètre. La séparation par isotachophorèse est réalisée par application d'un courant de 3μA.

La figure 7a montre qu'après un cycle de migration, il n'est pas possible de séparer ces quatre lanthanides avec un système de séparation classiquement utilisé.

Effectivement, après le cycle 0, une partie du néodyme est isolée, l'autre partie du néodyme est encore mélangée au samarium, à l'europium et au gadolinium. Aussi, la représentation graphique du signal conductimétrique en fonction du temps présente uniquement deux plateaux.

La séparation des quatre lanthanides est obtenue après cinq réitérations des différentes étapes.

L'isotachophorèse multi-cycles permet d'allonger artificiellement la longueur du capillaire sans avoir besoin d'augmenter la tension appliquée aux bornes du capillaire 30 permettant ainsi de séparer des espèces dont les vitesses de migration électrophorétique sont rapprochées.

La succession de cycles représentée sur les figures 7b à 7f montre une évolution progressive du profil de séparation pour aboutir à la formation de quatre bandes correspondant aux quatre lanthanides.

Eventuellement, si une espèce présente une vitesse de migration bien supérieure aux autres espèces, il est possible de l'extraire avant de poursuivre la séparation avec les autres espèces.

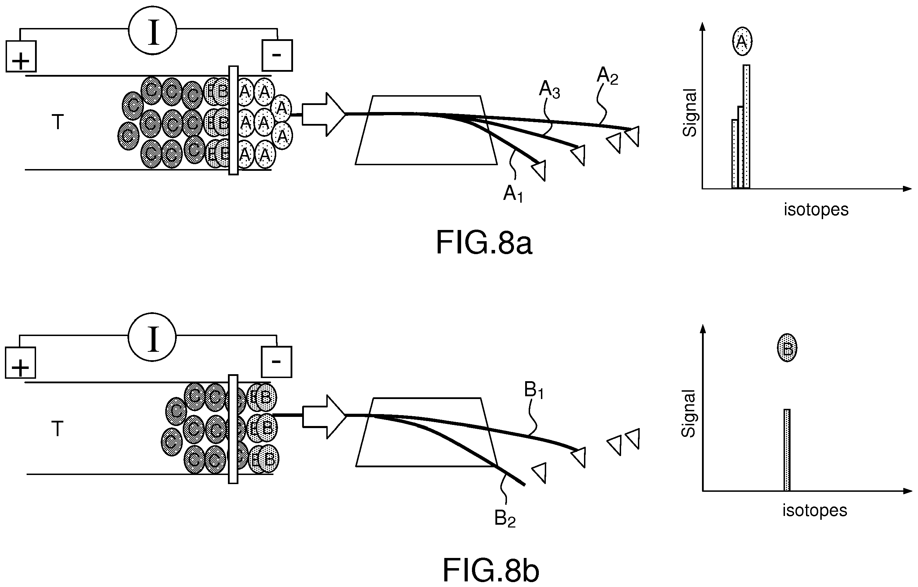

Les figures 8a à 8d représentent les étapes du procédé de mesure isotopique multi-élémentaire couplant une méthode d'isotachophorèse multi-cycle comme décrite précédemment et une méthode de spectrométrie de masse à l'aide d'un spectromètre de masse de type ICP-MS multi-détecteurs.

La figure 8a représente un capillaire après séparation des espèces A, B et C, les espèces A, B, et C étant situées au niveau de la sortie du détecteur sous forme de bandes mono-élémentaires, comme représenté sur la figure 6e.

L'espèce A est transmise au spectromètre de masse MC-ICPMS. En l'espèce, trois isotopes A1, A2, et A3 de l'élément A sont détectés sur les détecteurs. Le graphique représentant le niveau des signaux par MC-ICPMS présente trois pics correspondant aux trois isotopes.

La figure 8b représente le début de l'analyse de l'élément B par MC-ICPMS, deux isotopes B1 et B2 de l'élément B sont mis en évidence. Toutefois, seul un des deux isotopes B1 est détecté au niveau des détecteurs du spectromètre MC-ICPMS, les détecteurs n'étant pas positionnés de sorte à détecter l'autre isotope.

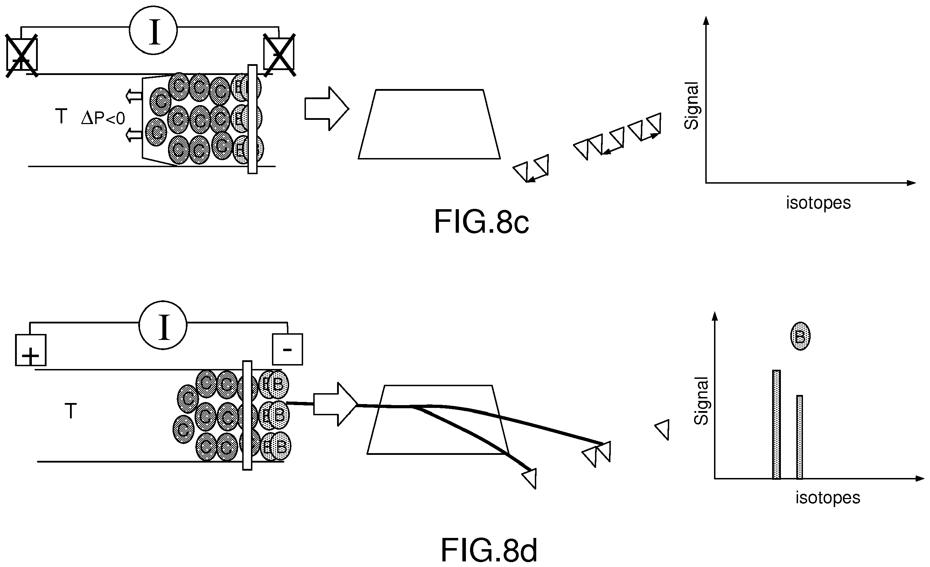

La figure 8c correspond à l'étape d'arrêt de la séparation et d'application de la contre-pression de manière à ramener vers l'entrée du capillaire les espèces B et C restantes. Durant cet arrêt, les détecteurs du spectromètre MC-ICPMS sont repositionnés de sorte à pouvoir détecter le deuxième isotope B2 de l'élément B.

La figure 8d correspond à l'étape de mesure isotopique de l'espèce B après un nouveau cycle de migration des espèces. L'espèce B est transmise au spectromètre MC-ICPMS, les deux isotopes B1 et B2 de l'espèce B sont détectés ce qui correspond aux deux pics sur le graphique représentant l'intensité du signal en fonction du temps.

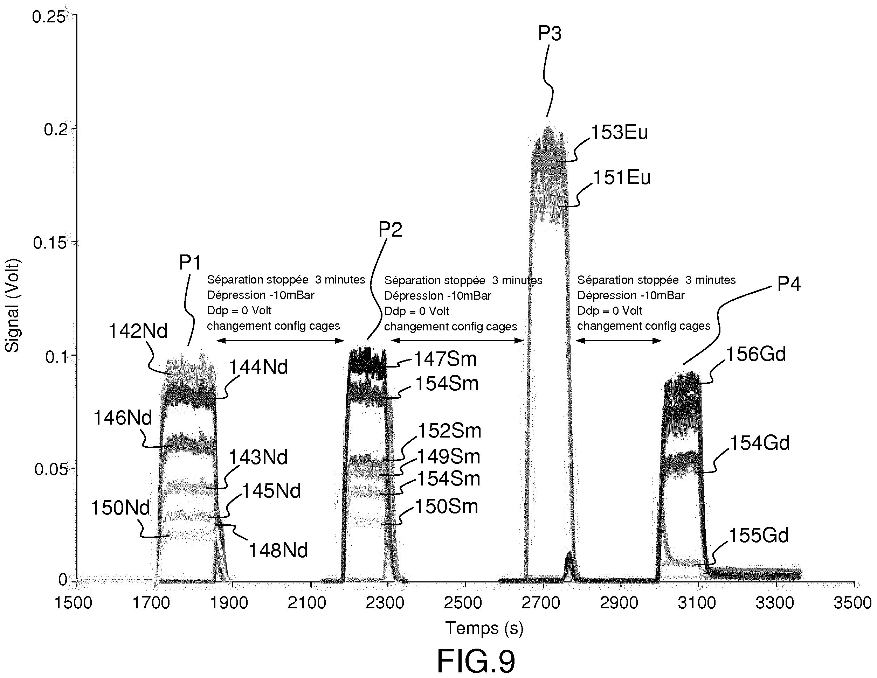

La figure 9 représente la séparation d'un mélange de quatre éléments lanthanides naturels Nd, Sm, Eu et Gd présentant 29 isotopes.

Cette figure permet de confirmer la validité du procédé de mesure isotopique multiélémentaire à élution séquentielle temporisée. En effet, l'acquisition des signaux conductimétriques des 29 isotopes a été réalisée en une seule séparation.

On obtient donc 29 signaux rectangulaires de largeurs voisines réparties en quatre groupes correspondant chacun à un élément lanthanide du mélange. Le graphique représente la mesure des signaux des isotopes obtenue par un spectromètre MC-ICPMS après une séparation par isotachophorèse selon le principe de l'invention. En l'espèce les détecteurs sont repositionnés lors des arrêts de la séparation de manière à détecter tous les isotopes.

Le graphique du signal en fonction du temps met en évidence quatre groupes de courbes P1, P2, P3 et P4. La séparation du mélange de lanthanides est stoppée après l'apparition de chacun des groupes et une contre-pression est appliquée. Durant l'application de la contre-pression, les détecteurs sont repositionnés.

Le premier groupe de courbes présente un pic P1 à 1800s correspondant à l'élément Néodyme, le deuxième groupe de courbes correspondant à l'élément Samarium présente un pic P2 à 2200s, le troisième groupe de courbes correspondant à l'élément Europium présente un pic P3 à 2700s et le quatrième groupe de courbes correspondant à l'élément gadolinium présente un pic P4 à 3000s.

Le premier groupe comprend les plateaux correspondant aux isotopes du néodyme, le MC-ICPMS détecte notamment les isotopes $^{142}Nd$, $^{143}Nd$, $^{144}Nd$, $^{145}Nd$, $^{146}Nd$, $^{148}Nd$, $^{150}Nd$. De la même façon, les autres groupes comprennent les courbes correspondant aux isotopes du Samarium, de l'Europium et du Gadolinium.

## Revendications

1. Procédé de séparation d'espèces électriquement chargées contenues dans une solution (S) par une méthode d'isotachophorèse comprenant :

   - une première étape dans laquelle on introduit en entrée d'un capillaire (30) d'électrophorèse, dans l'ordre suivant : un électrolyte meneur (M) d'une première vitesse de migration électrophorétique, une solution (S) comprenant des espèces chargées de vitesse de migration électrophorétique propres et un électrolyte terminal (T) d'une deuxième vitesse de migration électrophorétique, la première vitesse de migration électrophorétique étant la plus grande des vitesses de migration et la deuxième vitesse étant la plus petite des vitesses de migration,

   les étapes suivantes sont réalisées de manière itérative jusqu'à obtenir la séparation d'au moins une espèce chargée contenue dans la solution :

   - une deuxième étape dans laquelle on applique une tension électrique entre les deux extrémités du capillaire de manière à débuter la séparation des espèces,
   - une troisième étape dans laquelle on arrête la tension électrique,
   - une quatrième étape dans laquelle on applique une contre-pression de manière à déplacer les espèces (A, B, C) vers l'entrée du capillaire (30), la vitesse de déplacement des espèces lors de l'application de la contre-pression ($\Delta P$) étant inférieure à la vitesse de migration électrophorétique des espèces (A, B, C) sous l'effet de la tension électrique.

2. Procédé selon la revendication 1 dans lequel l'application de la contre-pression ($\Delta P$) déplace les espèces (A, B, C) jusqu'au niveau de l'entrée du capillaire (30).

3. Procédé selon l'une des revendications 1 ou 2 comprenant en outre une cinquième étape dans laquelle on effectue une mesure des rapports isotopiques par spectrométrie de masse couplée à un plasma inductif (ICP-MS) de toutes les espèces (A, B, C) contenues dans la solution (S) et séparées par isotachophorèse, le spectromètre de masse (ICP-MS) étant directement couplé avec le dispositif d'électrophorèse.

4. Procédé selon l'une des revendications 1 ou 2 comprenant en outre une cinquième étape dans laquelle on récupère après la deuxième étape d'application d'une tension une première espèce (A) séparée préalablement à la troisième étape d'arrêt du champ électrique.

5. Procédé selon la revendication 4 comprenant en outre une sixième étape dans laquelle on effectue une mesure de rapports isotopiques par spectrométrie de masse couplée à un plasma inductif (ICP-MS) de la première espèce (A) séparée par isotachophorèse avant de poursuivre la séparation par isotachophorèse des autres espèces (B, C), le spectromètre de masse (ICP-MS) étant directement couplé avec le dispositif d'électrophorèse.

6. Procédé selon l'une quelconque des revendications dans lequel le dispositif d'électrophorèse capillaire est au moins en partie un microsystème fluidique.

7. Procédé selon la revendication 4 dans lequel le spectromètre de masse couplée à un plasma inductif est de type multi-collection (MC-ICPMS).

8. Procédé selon la revendication 5 comprenant en outre une septième étape de positionnement des détecteurs du spectromètre de masse couplée à un plasma inductif lors d'un arrêt du courant électrique.

9. Procédé selon l'une des revendications précédentes dans lequel les espèces comprennent des anions minéraux, des cations minéraux, des composés organométalliques ou leurs mélanges, au moins deux espèces présentent une interférence isobarique telle que la différence de masse atomique entre les espèces chargées est comprises entre 0,001 et 0,9 unité de masse atomique.

10. Procédé selon l'une des revendications précédentes dans lequel les espèces chargées comprennent des métaux de transition, des alcalins, des alcalino-terreux, des lanthanides et/ou des actinides.

11. Procédé selon l'une des revendications précédentes dans lequel l'électrolyte meneur (M) et/ou terminal (T) est une solution aqueuse d'un composé comprenant les éléments carbone, et oxygène.


**Patentansprüche**

1. Verfahren zum Trennen von in einer Lösung (S) enthaltenen elektrisch geladenen Spezies mit einem Isotachophoreseverfahren, das Folgendes beinhaltet:

   - einen ersten Schritt, in dem am Eingang eines Elektrophoresekapillars (30) in der folgenden Reihenfolge Folgendes eingeleitet wird: ein Anfangselektrolyt (M) mit einer ersten elektrophoretischen Migrationsgeschwindigkeit, eine Lösung (S), die geladene Spezies mit einer elektrophoretischen Eigenmigrationsgeschwindigkeit umfasst, und ein Endelektrolyt (T) mit einer zweiten elektrophoretischen Migrationsgeschwindigkeit, wobei die erste elektrophoretische Migrationsgeschwindigkeit die höchste der Migrationsgeschwindigkeiten ist und die zweite Geschwindigkeit die niedrigste der Migrationsgeschwindigkeiten ist,
   - wobei die folgenden Schritte auf iterative Weise ausgeführt werden, bis die Trennung von wenigstens einer in der Lösung enthaltenen geladenen Spezies erzielt wird:

      - ein zweiter Schritt, in dem eine elektrische Spannung zwischen den beiden Enden des Kapillars angelegt wird, um die Trennung der Spezies einzuleiten,
      - ein dritter Schritt, in dem die elektrische Spannung gestoppt wird,
      - ein vierter Schritt, in dem ein Gegendruck aufgebracht wird, um die Spezies (A, B, C) zum Eingang des Kapillars (30) zu bewegen, wobei die Bewegungsgeschwindigkeit der Spezies beim Aufbringen des Gegendrucks ($\Delta P$) niedriger ist als die elektrophoretische Migrationsgeschwindigkeit der Spezies (A, B, C) unter der Wirkung der elektrischen Spannung.

2. Verfahren nach Anspruch 1, bei dem das Aufbringen des Gegendrucks ($\Delta P$) die Spezies (A, B, C) bis zum Eingang des Kapillars (30) verschiebt.

3. Verfahren nach Anspruch 1 oder 2, das ferner einen fünften Schritt beinhaltet, in dem eine Messung der isotopischen Verhältnisse durch Massenspektrometrie, gekoppelt mit einem induktiven Plasma (ICP-MS) aller Spezies (A, B, C) erfolgt, die in der Lösung (S) enthalten sind und durch Isotachophorese getrennt werden, wobei das Massenspektrometer (ICP-MS) direkt mit der Elektrophoresevorrichtung gekoppelt ist.

4. Verfahren nach Anspruch 1 oder 2, das ferner einen fünften Schritt beinhaltet, in dem nach dem zweiten Schritt des Anlegens einer Spannung eine erste Spezies (A) gewonnen wird, die zuvor im dritten Schritt des Stoppens des elektrischen Feldes getrennt wurde.

5. Verfahren nach Anspruch 4, das ferner einen sechsten Schritt beinhaltet, in dem eine Messung von isotopischen Verhältnissen durch Massenspektrometrie erfolgt, gekoppelt mit einem induktiven Plasma (ICP-MS) der ersten Spezies (A), die durch Isotachophorese vor dem Fortsetzen der Trennung anderer Spezies (B, C) durch Isotachophorese getrennt wird, wobei das Massenspektrometer (ICP-MS) direkt mit der Elektrophoresevorrichtung gekoppelt ist.

6. Verfahren nach einem der Ansprüche, bei dem die Kapillarelektrophoresevorrichtung wenigstens teilweise ein fluidisches Mikrosystem ist.

7. Verfahren nach Anspruch 4, wobei das mit einem induktiven Plasma gekoppelte Massenspektrometer vom Multikollektionstyp (MC-ICPMS) ist.

8. Verfahren nach Anspruch 5, das ferner einen siebten Schritt des Positionierens von Detektoren des Massenspektrometers beinhaltet, gekoppelt mit einem induktiven Plasma beim Stoppen des elektrischen Stroms.

9. Verfahren nach einem der vorherigen Ansprüche, bei dem die Spezies Mineralanionen, Mineralkationen, metallorganische Verbindungen oder deren Gemische enthalten, wenigstens zwei Spezies eine isobare Interferenz aufweisen, so dass die Atommassendifferenz zwischen den geladenen Spezies zwischen 0,001 und 0,9 Atommasseneinheit liegt.

10. Verfahren nach einem der vorherigen Ansprüche, bei dem die geladenen Spezies Übergangsmetalle, Alkalimetalle, Erdalkalimetalle, Lanthanide und/oder Actinide beinhalten.

11. Verfahren nach einem der vorherigen Ansprüche, bei dem der Anfangselektrolyt (M) und/oder der Endelektrolyt (T) eine wässrige Lösung einer Verbindung ist, die die Elemente Kohlenstoff und Sauerstoff umfasst.

**Claims**

1. A method for separating electrically charged species contained in a solution (S) by an isotachophoresis method comprising:

   - a first step in which the following are introduced into the inlet of an electrophoresis capillary (30), in this order: a leading electrolyte (M) with a first speed of electrophoretic migration, a solution (S) comprising charged species with their own individual speeds of electrophoretic migration and a terminating electrolyte (T) with a second speed of electrophoretic migration, the first speed of electrophoretic migration being the greatest of the speeds of migration and the second speed being the lowest of the speeds of migration;

   the following steps are repeated until separation of at least one charged species contained in the solution is obtained:

   - a second step in which an electrical voltage is applied between the two ends of the capillary so as to start separation of the species,
   - a third step in which the electrical voltage is stopped,
   - a fourth step in which a counter-pressure is applied so as to displace the species (A, B, C) towards the inlet of the capillary (30), the speed of displacement of the species during application of the counter-pressure ($\Delta P$) being lower than the speed of electrophoretic migration of the species (A, B, C) under the effect of the electrical voltage.

2. The method according to Claim 1 in which application of the counter-pressure ($\Delta P$) displaces the species (A, B, C) to the level of the inlet of the capillary (30).

3. The method according to either of Claims 1 or 2, further comprising a fifth step in which the isotopic ratios are measured by inductively coupled plasma mass spectrometry (ICP-MS) of all of the species (A, B, C) contained in the solution (S) and separated by isotachophoresis, the mass spectrometer (ICP-MS) being directly coupled to the electrophoresis device.

4. The method according to either of Claims 1 or 2, further comprising a fifth step in which a first species (A) separated prior to the third step of stopping the electric field is recovered after the second step of application of a voltage.

5. The method according to Claim 4, further comprising a sixth step in which isotopic ratios are measured by inductively coupled plasma mass spectrometry (ICP-MS) of the first species (A) separated by isotachophoresis before continuing isotachophoresis separation of the other species (B, C), the mass spectrometer (ICP-MS) being directly coupled to the electrophoresis device.

6. The method according to any of the claims in which the capillary electrophoresis device is at least partly a fluidic microsystem.

7. The method according to Claim 4 in which the inductively coupled plasma mass spectrometer is of the multi-collection type (MC-ICPMS).

8. The method according to Claim 5, further comprising a seventh step of positioning the detectors of the inductively coupled plasma mass spectrometer on stopping the electrical current.

9. The method according to any of the preceding claims in which the species comprise mineral anions, mineral cations, organometallic compounds or mixtures thereof, and at least two species display isobaric interference such that the atomic mass difference between the charged species is between 0.001 and 0.9 atomic mass unit.

10. The method according to any of the preceding claims in which the charged species comprise transition metals, alkali metals, alkaline-earth metals, lanthanides and/or actinides.

11. The method according to any of the preceding claims, wherein the leading electrolyte (M) and/or the terminating electrolyte (T) is an aqueous solution of a compound comprising the elements carbon and oxygen.

FIG.1

EP 3 037 153 B1

FIG.2a

FIG.2b

30

I

Détecteur conductimétrique

+ T M -

FIG.3a

+ T M -

FIG.3b

+ T M -

FIG.3c

Détecteur conductimétrique

FIG.4a

FIG.4b

FIG.4c

FIG.5a

FIG.5b

EP 3 037 153 B1

FIG.5c

FIG.5d

FIG.5e

EP 3 037 153 B1

FIG.6a

FIG.6b

FIG.6c

FIG.6d

FIG.6e

FIG.7a

FIG.7b

FIG.7c

FIG.7d

FIG.7e

FIG.7f

FIG.8a

FIG.8b

FIG.8c

FIG.8d

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3705845 A

- EP 2646813 A

**Littérature non-brevet citée dans la description**

- **PITOIS A. et al.** *International Journal Of Mass Spectrometry,* 2008, vol. 270, 118-126
- **F.M. EVERAERT et al.** Isotachophoresis, experiments with electrolyte counterflow. *J. Chromatogr.,* 1971, vol. 60, 397-405

- **S. BHATTACHARYYA et al.** Sample dispersion in isotachophoresis with Poiseuille counterflow. *Phys. Fluids,* 2013, vol. 25